# EUROPÄISCHE PATENTSCHRIFT

(11) **EP 2 502 745 B1**
(45) Veröffentlichungstag und Bekanntmachung des Hinweises auf die Patenterteilung: **16.04.2014**
(21) Anmeldenummer: 11185554.0
(22) Anmeldetag: 18.10.2011
(51) Int. Cl.: B32B 37/06, G03G 15/20, B32B 37/18

(54) **Laminiergerät mit PTC-Heizstab**
Laminator with PTC heating rod
Plastifieuse à bâton chauffant CTP

(30) Priorität: 25.03.2011 DE 202011004428 U
(43) Veröffentlichungstag der Anmeldung: 26.09.2012
(73) Patentinhaber: Monolith GmbH Bürosysteme, 45127 Essen (DE)
(72) Erfinder: Loibl, Bernd, 79771 Klettgau (DE)
(74) Vertreter: Albrecht, Ralf

(56) Entgegenhaltungen:
- EP-A2- 0 708 397
- US-A1- 2003 178 407

## Beschreibung

Die Erfindung betrifft ein Laminiergerät zum Heißlaminieren von Blattgut und Laminierfolie, mit einem Gerätegehäuse, durch das ein Durchlaufkanal für den Durchlauf einer Kombination von Blattgut und Laminierfolie geht, in dem zumindest eine Laminiereinheit mit einem Paar gegenüber liegender, einen Laminierspalt freilassender Laminierwalzen angeordnet ist, wobei sich längs wenigstens einem der beiden ein Paar bildenden Laminierwalzen ein Heizstab erstreckt, der als PTC-Heizstab ausgebildet ist.

Zum Schutz von Blattgut, insbesondere von wertvollen Dokumenten, ist es bekannt, das Blattgut mit einer Laminierfolie zu verschweißen. Dabei wird das Blattgut zwischen zwei eine Laminierfolie bildenden Folienblättern gelegt, die dann gemeinsam durch ein Laminiergerät transportiert werden. Die Folienblätter können auch in Form einer Laminierfolientasche vorliegen, bei denen die beiden Folienblätter an zumindest einer Seitenkante miteinander verbunden sind. Solche Laminierfolien sind beispielsweise aus der DE 201 00 328 U1 bekannt. Charakteristisch für Laminierfolien ist, dass sie als Verbundfolien ausgebildet sind, bei denen eine durchsichtige, klare Folie aus z.B. Polyester oder Polypropylen innenseitig mit einer wärmeempfindlichen Klebstoffschicht versehen ist, welche beispielsweise aus EVA (Ethylen-Vinylacetat-Copolymer) besteht.

Im nicht-industriellen Bereich, d.h. im Büro- und Privatbereich werden in der Regel als Tischgeräte ausgebildete Laminiergeräte eingesetzt. Solche Laminiergeräte sind beispielsweise aus der DE 20 2009 000 903 U1 bekannt. Sie haben im Wesentlichen den gleichen Aufbau, d.h. ein Gerätegehäuse, in dem eine Laminiereinheit angeordnet ist. Zwischen einer Zuführöffnung auf einer Seite und einer Austrittsöffnung auf der anderen Seite des Gerätegehäuses erstreckt sich ein Durchlaufkanal, dem die Laminiereinheit zugeordnet ist. Letztere weist in der Regel ein Walzenpaar auf, teilweise auch mehrere Walzenpaare, die aus jeweils zwei übereinander angeordneten, einen Laminierspalt ausbildenden Laminierwalzen bestehen. Dabei ist der Laminierspalt so eingestellt, dass die Kombination aus Blattgut und Laminierfolie in dem Laminierspalt einem erheblichen Druck ausgesetzt wird.

Bei Heißlaminiergeräten ist zumindest eine der Laminierwalzen, in der Regel beide, beheizt. Beim Durchlauf einer Kombination aus Blattgut und Laminierfolie wird diese Kombination also in dem Laminierspalt zusätzlich erhitzt. Dies macht die Klebstoffschicht der Laminierfolie klebfähig und sorgt für eine Verbindung der Folienblätter untereinander und mit dem zu verschweißenden Blattgut. Die Temperatur beim Heißlaminieren ist dabei so eingestellt, dass der Teil der Folienblätter, der aus der klaren Folie besteht, durch die Hitzeeinwirkung nicht beeinträchtigt wird.

Für die Beheizung der Laminierwalzen werden in der Regel Heizstäbe verwendet, die sich längs wenigstens einem der beiden ein Paar bildenden Laminierwalzen erstrecken. Generell erfolgt die Beheizung der Laminierwalzen von außen (vgl. DE 100 04 486 A1). Die Heizstäbe können jedoch auch in die als Hohlwalzen ausgebildeten Laminierwalzen eingebaut werden. Dies hat allerdings den Nachteil, dass die elektrische Stromzufuhr über Schleifkontakte übertragen werden muss, die nicht nur Verluste erzeugen, sondern auch Funkenschutzeinrichtungen erfordern.

Als Heizstäbe werden vor allem normale Widerstandsheizstäbe verwendet. Damit die Aufwärmphase akzeptabel kurz ist, haben solche Widerstandsheizstäbe eine Leistungsaufnahme, die ohne weitere Beeinflussung später zu hohe Temperaturen zur Folge hätte. Wünschenswert ist es mit Blick auf die Hitzebeständigkeit der Laminierfolien, die Temperatur der Laminierwalzen in einem Temperaturkorridor zwischen 110 und 130°C zu halten. Hierzu ist in der EP 0 708 397 A2 vorgeschlagen, die Stromzufuhr zu den Heizstäben intermittierend in Intervalle ohne Stromzufuhr und solche mit Stromzufuhr zu unterbrechen, wobei die Länge des Intervalls mit Stromzufuhr in Abhängigkeit von der Temperatur des Heizstabes bestimmt wird. Aufgrund dieser Rückkopplung handelt es sich um eine Temperaturregelung, die einen Temperatursensor und eine entsprechende Schaltung erfordert. Angesichts der hohen Leistungsaufnahme während der Phase, in der eine Stromzufuhr erfolgt, kann aber auch dann nur ein sehr unruhiges Temperaturprofil mit Temperaturschwankungen von mehr als 30°C erreicht werden. Hinzu kommt die Tendenz, dass sich die Temperatur trotz der regelmäßigen Stromzufuhrunterbrechung mit der Zeit weiter erhöht. Zur Vermeidung von Schäden an dem Laminiergerät ist deshalb zusätzlich ein Überhitzungsschutz erforderlich. Wird er aktiviert, steht das Laminiergerät für die Abkühlzeit nicht zur Verfügung. Deshalb ist auch versucht worden, eine aufwändige Temperaturregelung vorzusehen. Was dennoch bleibt, ist ein hoher Stromverbrauch. Außerdem muss das Gehäuse des Laminiergeräts aus einem hochtemperaturfesten Kunststoff gefertigt werden. Solche Kunststoffe sind hinsichtlich ihrer Entsorgung problematisch.

Daneben ist auch versucht worden, die Laminierwalzen mit Hilfe von PTC-Heizstäben zu erhitzen (US 2003/0178407 A1). Sie haben ein Temperaturwiderstandsverhalten, die die erzeugte Wärmeleistung bei steigender Temperatur absinken lässt, d.h. der PTC-Heizstab ist weitgehend selbstregelnd. Bei solchen PTC-Heizstäben wird deshalb auf eine externe Steuerung oder Regelung sowie auf einen Überhitzungsschutz verzichtet. Ein weiterer Vorteil besteht darin, dass verschieden dicke Laminierfolien mit derselben Temperatur laminiert werden können, da der PTC-Heizstab die Wärmeenergie entsprechend dem Wärmebedarf regelt, d.h. bei dünnerer Folie wird weniger Wärmeenergie als bei einer dickeren Folie zur Verfügung gestellt.

Es hat sich gleichwohl gezeigt, dass das Temperaturverhalten von PTC-Heizstäben für den Einsatz in Laminiergenoch nicht optimal ist, insbesondere wenn das Laminiergerät über eine längere Zeit angeschaltet bleibt. Der Erfindung liegt deshalb die Aufgabe zugrunde, ein Laminiergerät der eingangs genannten Art derart auszubilden, dass die Wärmeentwicklung in dem Laminiergerät möglichst unbegrenzt gleich bleibt und somit die Laminierergebnisse unabhängig davon sind, wie lange das Laminiergerät angeschaltet ist.

Diese Aufgabe wird erfindungsgemäß dadurch gelöst, dass dem PTC-Heizstab ein Zeitschalter für die Stromzufuhr zugeordnet ist, der die Stromzufuhr abwechselnd in Zeitintervalle ohne Stromzufuhr und Zeitintervalle mit Stromzufuhr aufteilt. Grundgedanke der Erfindung ist es also, dem PTC-Heizstab trotz seines an sich selbstregelnden Temperaturverhaltens zusätzlich einen Zeitschalter zur intermittierenden Unterbrechung der Stromzufuhr zuzuordnen. Überraschenderweise hat sich gezeigt, dass hierdurch ein außerordentlich gleichmäßiger Temperaturverlauf mit nur geringer Schwankungsbreite erzielt wird, der praktisch unbegrenzte Langzeitstabilität hat. Es bedarf deshalb keiner Temperaturregelung und keines Überhitzungsschutzes. Gleichzeitig lässt sich eine relativ kurze Aufheizzeit verwirklichen. Hinzu kommt, dass der Stromverbrauch gegenüber normalen Widerstandsheizstäben drastisch und auch gegenüber PTC-Heizstäben ohne Zeitschaltsteuerung erheblich reduziert werden konnte. Mit Hilfe der intermittierenden Unterbrechung der Stromzufuhr kann eine für den Laminiervorgang optimale Temperatur eingestellt werden, so dass die Laminierergebnisse auch bei langer Betriebsdauer des Laminiergerätes reproduzierbar gleich bleiben. Schließlich ist die Verwendung hochtemperaturfester Kunststoffe nicht mehr erforderlich.

In Ausbildung der Erfindung ist vorgesehen, dass die Zeitintervalle ohne Stromzufuhr und die mit Stromzufuhr konstant sind, also die Stromzufuhr in immer gleichbleibenden Abständen unterbrochen wird.

Das für das jeweilige Laminiergerät optimale Verhältnis der Zeitintervalle mit und ohne Stromzufuhr kann durch einfache Versuche in überschaubarer Anzahl ermittelt werden. In den meisten Fällen können die Zeitintervalle mit Stromzufuhr kürzer sein als die ohne, wodurch der Stromverbrauch entsprechend reduziert wird. Beispielsweise können die Zeitintervalle ohne Stromzufuhr mindestens dem dreifachen, zweckmäßigerweise mindestens dem vierfachen der Zeitintervalle mit Stromzufuhr entsprechen. Zweckmäßigerweise liegen die Zeitintervalle mit Stromzufuhr unter 10 sec, vorzugsweise unter 5 sec.

Generell gilt, dass die Nenntemperatur des Laminiergerätes, also die Temperatur, die nach der Aufwärmphase erreicht wird, zwischen 110 und 130°C, vorzugsweise zwischen 115 und 125°C, noch besser bei 120°C liegt. Dann sollten die Längen der Zeitintervalle mit und ohne Stromzufuhr derart eingestellt sein, dass die Nenntemperatur mit einer Schwankungsbreite von ± 2°C eingehalten wird. Die Einstellung kann durch die schon angesprochenen Versuche ohne weiteres empirisch ermittelt werden.

In weiterer Ausgestaltung der Erfindung ist vorgesehen, dass der Zeitschalter nach dem Start des Laminiergerätes erst nach einer Aufheizphase wirksam wird, also erst dann, wenn der PTC-Heizstab die Nenntemperatur des Laminiergerätes erreicht hat. Dabei sollte die Aufheizphase wenigstens 2 min, vorzugsweise wenigstens 4 min dauern.

Nach der Erfindung ist ferner vorgesehen, dass sich der PTC-Heizstab durch wenigstens eine der beiden ein Paar bildenden Laminierwalzen axial erstreckt, so dass die davon betroffene Laminierwalze von innen beheizt wird. Dies stellt eine effektive Beheizung der Laminierwalzen dar. Vorzugsweise sollte der PTC-Heizstab gerätefest fixiert sein, wobei die jeweils zugehörige Laminierwalze gegenüber dem PTC-Heizstab verdrehbar gelagert ist. Aufgrund der gerätefesten Fixierung kann der PTC-Heizstab direkt mit Anschlusskabeln für die elektrische Stromzuführung verbunden werden. Die Nachteile einer Schleifringzuführung entfallen damit.

In weiterer Ausbildung der Erfindung ist vorgesehen, dass der PTC-Heizstab aus Keramik mit Bariumnitrat als Grundmaterial besteht. Er sollte beidseitig mit über dessen Länge sich erstreckenden Flachelektroden versehen sein. Da keine wärmeleitende Verbindung zwischen PTC-Heizstab und Laminierwalzen besteht, ist der Wärmeübergang nicht so gut wie bei Fixierung des Heizstabes in der Laminierwalze. Es werden jedoch gute Wärmeübergangswerte erzielt, wenn der Abstand zwischen PTC-Heizstab möglichst gering ist, vorzugsweise 0,5 bis 1 mm beträgt.

Die erfindungsgemäßen Vorteile werden schon dann erzielt, wenn nur eine der beiden ein Paar bildenden Laminierwalzen in erfindungsgemäßer Weise mit einem PTC-Heizstab versehen ist. Zweckmäßigerweise sind aber beide Laminierwalzen so ausgestattet, so dass jede Laminierwalze mit einem gerätefest fixierten PTC-Heizstab versehen ist. Es versteht sich, dass auch mehrere Paare von Laminierwalzen vorhanden sein können, die dann in gleicher Weise mit PTC-Heizstäben ausgerüstet sind.

In der Zeichnung ist die Erfindung anhand eines Ausführungsbeispiels näher veranschaulicht. Es zeigen:
- Figur 1: eine Schrägansicht der Rückseite des erfindungsgemäßen Laminiergeräts;
- Figur 2: das Laminiergerät gemäß Figur 1 im Querschnitt;
- Figur 3: eine Schrägansicht einer Laminierwalze des Laminiergeräts gemäß den Figuren 1 und 2 mit PTC-Heizstab;
- Figur 4: eine Stirnseitenansicht der Laminierwalze gemäß Figur 3;
- Figur 5: einen Längsschnitt durch die Laminierwalze gemäß den Figuren 3 und 4;
- Figur 6: eine Grafik zur Darstellung der Energieaufnahme des PTC-Heizstabes über die Zeit im Vergleich zu der eines normalen Widerstandsheizstabes; und
- Figur 7: eine Grafik zur Darstellung des Temperaturverlaufs des PTC-Heizstabes über die Zeit nach dem Start des Laminiergerätes im Vergleich zu dem Temperaturverlauf des normalen Widerstandheizstabes.

Das in der Zeichnung dargestellte Laminiergerät 1 hat ein Gehäuse 2 mit einem ebenen Gehäuseboden 3, einer Frontwandung 4, einer Rückwandung 5 und einer die Frontwandung 4 und die Rückwandung 5 verbindenden, bogenförmigen Oberwandung 6. Letztere ist mit einer Vielzahl von Kühlschlitzen - beispielhaft mit 7 bezeichnet - versehen.

Von der Rückwandung 5 zur Frontwandung 4 erstreckt sich durch das Gehäuse 2 ein schräg abwärts gerichteter Durchlaufkanal 8 in einer solchen Breite, dass DIN A4-Blattgut querformatig durchgeleitet werden kann. Der Durchlaufkanal 8 wird eingangsseitig durch eine Zuführöffnung 9 in der Rückwandung 5 und einer Austrittsöffnung 10 in der Frontwandung 4 begrenzt.

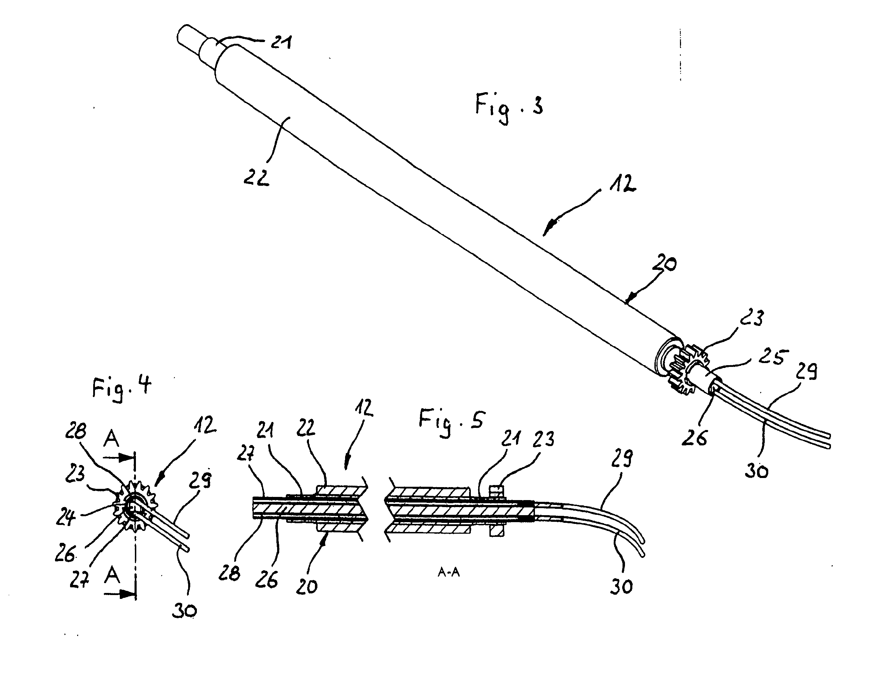

Etwa in der Mitte des Durchlaufkanals 8 befindet sich eine Laminiereinheit 11, von der hier zwei übereinander mit ihren Drehachsen parallel zueinander angeordnete Laminierwalzen 12, 13 zu sehen sind. Die Laminierwalzen 12, 13 erstrecken sich über die gesamte Breite des Durchlaufkanals 8 und bilden zwischen sich einen Laminierspalt 14 aus. Die Laminierwalzen 12, 13 sind - was in den Figuren 3 bis 5 noch näher erläutert wird ― beiheizt. Sie sind auch Teil einer Transporteinrichtung, zu der ein elektormotorischer, hier nicht näher dargestellter Antrieb gehört, der die beiden Laminierwalzen 12, 13 beim Laminiervorgang synchron antreibt, und zwar die obere Laminierwalze 12 im Uhrzeigersinn und die untere Laminierwalze 13 entgegen dem Uhrzeigersinn. Ihre Umfangsgeschwindigkeiten sind identisch.

An der Rückwandung 5 angebracht ist eine Blattauflage 15, deren Oberseite 16 sich bündig an die Unterseite des Durchlaufkanals 8 anschließt und in der gleichen Richtung geneigt ist wie der Durchlaufkanal 8 selbst. Benachbart zur Zuführöffnung 9 ragen über die Oberseite 16 der Blattauflage 15 hinaus zwei Führungsstege 17, 18, die sich gegenüberstehen und die aufgrund mechanischer Kupplung gegensinnig in der Weise bewegbar sind, dass sich bei einer Verstellung die Mitte des Abstandes zwischen den beiden nicht verlagert. Der Abstand der Führungsstege 17, 18 ist auf diese Weise an das Format der jeweils zu laminierenden Kombination aus Laminierfolie und Blattgut so anpassbar, dass beide Seitenränder dieser Kombination beim Einführen in den Durchlaufkanal 8 durch die Führungsstege 17, 18 geführt werden und die Laminierfolie zentrisch in den Durchlaufkanal 8 einläuft.

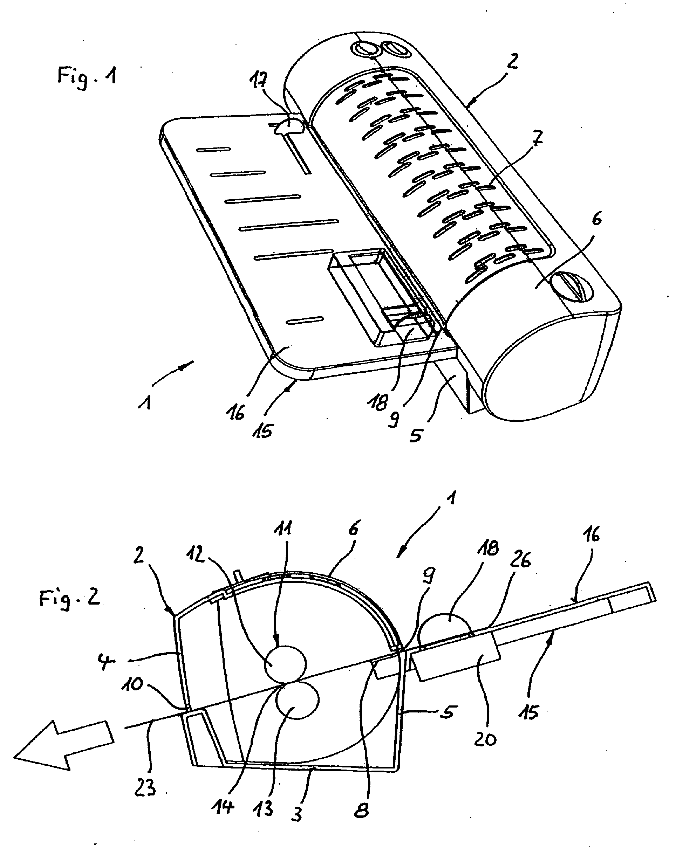

Die in den Figuren 3 bis 5 dargestellte, aus dem Laminiergerät 1 isolierte Laminierwalze 12 ist als Hohlwalze 20 ausgebildet, welche aus einer metallischen Walzenhülse 21 und einem darauf aufgebrachten, aus Silikon bestehenden Walzenbezug 22 besteht. Die Walzenhülse 21 ist in hier nicht näher dargestellten Lagern innerhalb des Laminiergerätes 1 drehbar gelagert. An einem Ende ist die Walzenhülse 21 mit einem Stirnzahnrad 23 drehfest verbunden. Über dieses Stirnzahnrad 23 kann die Laminierwalze 12 in der oben beschriebenen Drehrichtung angetrieben werden. Die andere Laminierwalze 13 (Figur 2) hat ebenfalls ein solches Stirnzahnrad, das mit dem Stirnzahnrad 23 der Laminierwalze 12 kämmt. Der Antrieb erfolgt über einen Elektromotor.

Die Hohlwalze 20 umgibt einen im Querschnitt kreisrunden Hohlraum 24, in die ein PTC-Heizstab 25 hineinragt. Der PTC-Heizstab 25 hat einen Stabkern 26 aus einem Material, das PTC-Verhalten hat. Vorzugsweise wird als Grundmaterial Bariumtitanat verwendet. Der Stabkern 26 hat rechteckigen Querschnitt und ist an der Ober- und Unterseite mit sich über die Länge des Stabkerns 26 erstreckende Metallelektroden 27, 28 beschichtet. Diese sind mit Isoliermaterial abgedeckt und an der Seite, an der sich auch das Stirnzahnrad 23 befindet, mit Elektroleitungen 29, 30 zwecks Zufuhr von elektrischer Energie verbunden.

Der PTC-Heizstab 25 ist in dem Laminiergerät 1 gerätefest gehalten, d.h. bei einem Laminiervorgang wird nur die Hohlwalze 20 in Drehbewegung versetzt, während der PTC-Heizstab 25 sich nicht mitbewegt, also seine Lage in Bezug auf das Gehäuse 2 beibehält. Der Wärmeübergang zwischen PTC-Heizstab 25 und Hohlwalze 20 geschieht über den zwischen beiden vorhandenen Luftspalt.

In den Figuren 1 bis 5 nicht dargestellt ist eine Zeitschalteinrichtung, die den Elektroleitungen 29, 30 in dem Laminiergerät 1 zugeordnet ist. Die Zeitschalteinrichtung hat ein erstes Zeitglied, die nach dem Start des Laminiergerätes 1 für eine unterbrechungsfreie Stromzufuhr über eine Aufwärmphase von ca. 4,5 min sorgt. Dann erfolgt über ein zweites Zeitglied - sich wiederholend - eine Unterbrechung der Stromzufuhr für 18 sec und dann wieder eine Zuschaltung für 4 sec.

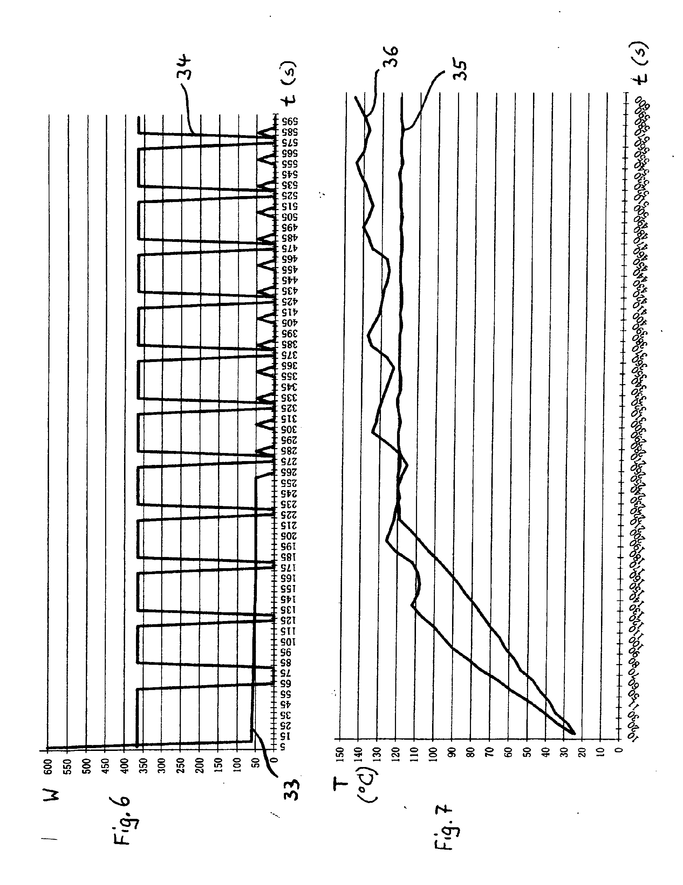

In Figur 6 ist der Verlauf der Energiezufuhr bzw. Stromzufuhr in Watt (W) über die Zeit (t) dargestellt. Der Stromzufuhrverlauf zu dem PTC-Heizstab 25 ist durch die Kurve 33 gezeigt. Zu sehen ist, dass nach dem Start des Laminiergerätes 1 die anfängliche Stromzufuhr von 600 W innerhalb weniger Sekunden auf ca. 50 W absinkt und dann nach ca. 240 sec erstmals unterbrochen wird. Aufgrund der regelmäßigen Unterbrechung für 18 sec und jeweils einer Stromzufuhr über 4 sec liegt der summierte Energieverbrauch deutlich unter 50 W. Im Vergleich ist der Verlauf der Stromzufuhr bei einem normalen Widerstandsheizstab mit der Kurve 34 eingezeichnet. Es ist zu erkennen, dass die Unterbrechungen nur kurz sind, so dass sich ein summierter Verbrauch von 300 bis 350 W ergibt.

In Figur 7 ist der Verlauf der Temperatur (T) über die Zeit (t) ab Einschalten des Laminiergerätes 1 dargestellt. Die Kurve 35 zeigt den Temperaturverlauf des erfindungsgemäßen PTC-Heizstabes 25. Es ist zu erkennen, dass der PTC-Heizstab 25 nach ca. 3,5 min die Nenntemperatur von 120°C erreicht und dass diese Nenntemperatur mit nur ganz geringfügigen Schwankungen konstant über die gesamte dargestellte Zeit gleich bleibt. Die zum Vergleich eingezeichnete Kurve 36 zeigt den Temperaturverlauf des normalen Widerstandsheizstabes, dessen Leistungsaufnahme in Figur 6 dargestellt ist. Es ist zu erkennen, dass sich der Widerstandsheizstab schneller aufheizt, dann aber das Temperaturprofil große Schwankungen hat. Es ist zudem die Tendenz zu erkennen, dass die mittlere Temperatur immer höher wird und zum Ende hin, d.h. nach etwa 10 min, im Bereich von 140°C liegt. Diese Temperatur ist für einen weiteren Betrieb zu hoch, so dass eine vorübergehende Abschaltung über einen zusätzlichen Überhitzungsschutz stattfinden muss.

## Patentansprüche

1. Laminiergerät (1) zum Heißlaminieren von Blattgut und Laminierfolie, mit einem Gerätegehäuse (2), durch das ein Durchlaufkanal (8) für den Durchlauf einer Kombination von Blattgut und Laminierfolie geht, in dem zumindest eine Laminiereinheit (11) mit einem Paar gegenüber liegender, einen Laminierspalt (14) frei lassender Laminierwalzen (12, 13) angeordnet ist, wobei sich längs wenigstens einem der beiden ein Paar bildenden Laminierwalzen (12, 13) ein an eine elektrische Stromzufuhr angeschlossener Heizstab (25) erstreckt, der als PTC-Heizstab (25) ausgebildet ist, **dadurch gekennzeichnet, dass** dem PTC-Heizstab (25) ein Zeitschalter für die Stromzufuhr zugeordnet ist, der die Stromzufuhr abwechselnd in Zeitintervalle ohne Stromzufuhr und Zeitintervalle mit Stromzufuhr aufteilt.

2. Laminiergerät nach Anspruch 1, **dadurch gekennzeichnet, dass** die Zeitintervalle ohne Stromzufuhr und die Zeitintervalle mit Stromzufuhr konstant sind.

3. Laminiergerät nach Anspruch 1 oder 2, **dadurch gekennzeichnet, dass** die Zeitintervalle mit Stromzufuhr kürzer sind als die ohne.

4. Laminiergerät nach Anspruch 3, **dadurch gekennzeichnet, dass** die Zeitintervalle ohne Stromzufuhr mindestens dem dreifachen, zweckmäßigerweise mindestens dem vierfachen der Zeitintervalle mit Stromzufuhr entsprechen.

5. Laminiergerät nach Anspruch 4, **dadurch gekennzeichnet, dass** die Zeitintervalle mit Stromzufuhr unter 10 s, vorzugsweise unter 5 s liegen.

6. Laminiergerät nach einem der Ansprüche 1 bis 5, **dadurch gekennzeichnet, dass** die Nenntemperatur des Laminiergeräts (1) zwischen 110 und 130°C, vorzugsweise zwischen 115 und 125°C, noch besser bei 120°C liegt und dass die Längen der Zeitintervalle mit und ohne Stromzufuhr derart eingestellt sind, dass die Nenntemperatur mit einer Schwankungsbreite von ± 2°C eingehalten wird.

7. Laminiergerät nach einem der Ansprüche 1 bis 6, **dadurch gekennzeichnet, dass** das Zeitelement nach dem Start des Laminiergerätes (1) erst nach einer Aufheizphase wirksam wird.

8. Laminiergerät nach Anspruch 7, **dadurch gekennzeichnet, dass** die Aufheizphase bis zum Erreichen einer Nenntemperatur dauert.

9. Laminiergerät nach Anspruch 8, **dadurch gekennzeichnet, dass** die Aufheizphase wenigstens 2, vorzugsweise wenigstens 4min dauert.

10. Laminiergerät nach einem der Ansprüche 1 bis 9, **dadurch gekennzeichnet, dass** sich der PTC-Heizstab (25) durch wenigstens eine der beiden ein Paar bildenden Laminierwalzen (12, 13) axial erstreckt.

11. Laminiergerät nach Anspruch 10, **dadurch gekennzeichnet, dass** der PTC-Heizstab (25) gerätefest fixiert ist, wobei die jeweils zugehörige Laminierwalze (12) gegenüber dem PTC-Heizstab (25) verdrehbar gelagert ist.

12. Laminiergerät nach Anspruch 10 oder 11, **dadurch gekennzeichnet, dass** der PTC-Heizstab (25) aus Keramik mit Bariumnitrat als Grundmaterial besteht.

13. Laminiergerät nach einem der Ansprüche 10 bis 12, **dadurch gekennzeichnet, dass** der PTC-Heizstab (25) beidseitig mit über dessen Länge sich erstreckenden Flachelektroden (27, 28) versehen ist.

14. Laminiergerät nach einem der Ansprüche 10 bis 13, **dadurch gekennzeichnet, dass** der PTC-Heizstab (25) zur Innenseite der zugehörigen Laminierwalze (12) einen Abstand von 0,5 bis 1 mm hat.

15. Laminiergerät nach einem der Ansprüche 1 bis 14, **dadurch gekennzeichnet, dass** beide ein Paar bildenden Laminierwalzen (12, 13) mit PTC-Heizstäben (25) versehen sind.

## Claims

1. A laminator (1) for hot laminating sheet material and a laminating foil,
comprising a unit housing (2) through which a pass-through channel (8) extends for passing through a combination of sheet material and laminating foil,
wherein at least one laminating unit (11) including a pair of opposite laminating rollers (12, 13) defining a laminating gap (14) is arranged in the pass-through channel (8),
wherein a heating rod (25) extends along at least one of the two laminating rollers (12, 13) forming the pair,
wherein the heating rod is connected to an electric power supply and configured as a PTC heating rod (25),
wherein the PTC heating rod (25) is associated with a timing switch for power supply which divides the power supply in an alternating manner into time intervals without power being supplied and time intervals with power being supplied.

2. The laminator according to claim 1, wherein the time intervals without power being supplied and the time intervals with power being supplied have constant lengths.

3. The laminator according to claim 1 or 2, wherein the time intervals with power being supplied are shorter than the time intervals without power being supplied.

4. The laminator according to claim 3, wherein the length of the time intervals without power being supplied corresponds to at least three times the length, advantageously at least four times the length, of the time intervals with power being supplied.

5. The laminator according to claim 4, wherein the length of time intervals with power being supplied is below 10 seconds, preferably below 5 seconds.

6. The laminator according to one of the claims 1 through 5, wherein the nominal temperature of the laminator (1) is between 110° C and 130° C, advantageously between 115° C and 125° C, more advantageously at 120° C and the lengths of the time intervals with power being supplied and without power being supplied are selected so that a nominal temperature is maintained with a variation of ± 2° C.

7. The laminator according to one of the claims 1 through 6, wherein the timing switch only becomes effective after startup of the laminator (1) and after a heat up phase.

8. The laminator according to claim 7, wherein the heat up phase extends until the nominal temperature has been reached.

9. The laminator according to claim 8, wherein the heat up phase has a length of at least 2 minutes, advantageously 4 minutes.

10. The laminator according to one of the claims 1 through 9, wherein the PTC heating rod (25) extends axially through at least one of the two laminating rollers (12, 13) forming the pair.

11. The laminator according to claim 10, wherein the PTC heating rod (25) is fixated at the laminator housing, wherein the respectively associated laminating rollers (12) are rotatably supported relative to the PTC heating rod (25).

12. The laminator according to claim 10 or 11, wherein the PTC heating rod (25) is made from ceramic material with barium-nitrate as a base material.

13. The laminator according to one of the claims 10 through 12, wherein the PTC heating rod (25) is provided on both sides with flat electrodes (27, 28) extending over the length of the heating rod.

14. The laminator according to one of the claims 10 through 13, wherein the PTC heating rod (25) has a distance of 0.5 mm to 1 mm from an inside of an associated laminating roller (12).

15. The laminator according to one of the claims 1 through 14, wherein both laminating rollers (12, 13) forming the pair are provided with PTC heating rods (25).

## Revendications

1. Plastifieuse (1) pour la plastification à chaud de matériaux en feuille et du film à plastifier, avec une enceinte (2) à travers laquelle passe un canal de passage (8) pour le passage d'une combinaison de matériaux en feuille et de film à plastifier, dans lequel est disposée au moins une unité de plastification (11) avec un couple de cylindres de plastification (12, 13) opposés séparés par une fente de plastification (14), une tige chauffante (25), réalisée en tant que tige chauffante PTC (25) et branchée à l'alimentation électrique, s'étendant le long d'au moins un des deux cylindres de plastification (12, 13) qui forment un couple, **caractérisée en ce que** la tige chauffante PTC (25) comporte un commutateur temporel pour le courant électrique qui distribue le courant électrique en alternant entre des intervalles sans courant électrique et des intervalles avec courant électrique.

2. Plastifieuse selon la revendication 1, **caractérisée en ce que** les intervalles sans courant électrique et les intervalles avec courant électrique sont régulier.

3. Plastifieuse selon la revendication 1 ou 2, **caractérisée en ce que** l'intervalle avec courant électrique est plus court que celui sans courant.

4. Plastifieuse selon la revendication 3, **caractérisée en ce que** l'intervalle sans courant électrique correspond au moins à trois fois, de préférence au moins à quatre fois l'intervalle avec courant électrique.

5. Plastifieuse selon la revendication 4, **caractérisée en ce que** l'intervalle de temps avec courant électrique est inférieur à 10 secondes, préférablement à 5 secondes.

6. Plastifieuse selon l'une des revendications 1 à 5, **caractérisée en ce que** la température nominale de la plastifieuse (1) est comprise entre 110 et 130 °C, préférablement entre 115 et 125 °C ou idéalement à 120 °C, et que la longueur des intervalles de temps avec et sans courant électrique est réglée de façon à ce que la température nominale est maintenue avec un écart d'oscillation de ± 2°C.

7. Plastifieuse selon l'une des revendications 1 à 6, **caractérisée en ce que** l'élément temporel ne s'active au démarrage de la plastifieuse (1) qu'après une phase de réchauffement.

8. Plastifieuse selon la revendication 7, **caractérisée en ce que** la phase de réchauffement dure jusqu'à l'atteinte d'une température nominale.

9. Plastifieuse selon la revendication 8, **caractérisée en ce que** la phase de réchauffement dure au moins deux, préférablement au moins quatre minutes.

10. Plastifieuse selon l'une des revendications 1 à 9, **caractérisée en ce que** la tige chauffante PTC (25) s'étend axialement à travers au moins l'un des deux cylindres de plastification (12, 13) qui forment un couple.

11. Plastifieuse selon la revendication 10, **caractérisée en ce que** la tige chauffante PTC (25) est fixée à l'appareil, le cylindre de plastification (12) correspondant étant monté pivotant à l'opposé de la tige chauffante PTC (25).

12. Plastifieuse selon la revendication 10 ou 11, **caractérisée en ce que** la tige chauffante PTC (25) est composée de céramique avec du nitrate de baryum comme matériau de base.

13. Plastifieuse selon l'une des revendications 10 à 12, **caractérisée en ce que** les deux côtés de la tige chauffante PTC (25) sont pourvus d'électrodes plates (27, 28) qui s'étendent sur la longueur de celle-ci.

14. Plastifieuse selon l'une des revendications 10 à 13, **caractérisée en ce qu'**un écart de 0,5 à 1 mm sépare la tige chauffante PTC (25) du côté intérieur du cylindre de plastification correspondant (12).

15. Plastifieuse selon l'une des revendications 10 à 14, **caractérisée en ce que** les deux cylindre de plastification (12, 13) qui forment un couple sont pourvus de tiges chauffantes PTC (25).
